# EUROPÄISCHE PATENTSCHRIFT

(11) **EP 2 547 740 B1**
(45) Veröffentlichungstag und Bekanntmachung des Hinweises auf die Patenterteilung: **13.08.2014**
(21) Anmeldenummer: 11716368.3
(22) Anmeldetag: 16.03.2011
(51) Int. Cl.: C09J 5/08, C08L 75/04, C08G 18/00, C08K 5/103, C09J 175/04

(54) **SCHAUMKLEBERZUSAMMENSETZUNG**
FOAM ADHESIVE COMPOUND
COMPOSITION D'ADHÉSIF EXPANSIBLE

(30) Priorität: 17.03.2010 DE 102010011696
(43) Veröffentlichungstag der Anmeldung: 23.01.2013
(73) Patentinhaber: RATHOR AG, 9050 Appenzell (CH)
(72) Erfinder: NÜTZEL, Rainer, CH-9057 Weissbad (CH)
(74) Vertreter: Thiel, Christian
(86) Internationale Anmeldenummer: PCT/EP2011/001298
(87) Internationale Veröffentlichungsnummer: WO 2011/113587

(56) Entgegenhaltungen:
- EP-A1- 1 674 493
- WO-A2-2008/031791
- DE-A1- 19 738 670
- DE-T2- 60 001 873
- US-A- 5 951 796

## Beschreibung

Die Erfindung betrifft eine Schaumkleberzusammensetzung zum Verkleben von mineralischen Werkstoffen, insbesondere Mauersteinen, wobei die Zusammensetzung nach der Applikation in einem definierten Zeitraum in sich zusammenfällt, ohne zu zerfließen. Die Zusammensetzung enthält ein isocyanathaltiges . Prepolymer, eine Treibgasmischung, Katalysator sowie viskositätsregulierende und/oder flammhemmende Zusätze.

Schaumzusammensetzungen auf Basis von isocyanathaltigen Prepolymeren werden vielfach zur Erzeugung von Montageschäumen im Bauhandwerk eingesetzt. Sie beruhen auf der Eigenschaft isocyanathaltiger Prepolymerer, zu einem festen Schaum erstarren und die Bauteile isolierend miteinander verbinden, wenn sie mit Hilfe von Treibmitteln aus einer Druckdose aus- und in eine Fuge zwischen Bauteilen eingebracht werden. Derartige Schaumzusammensetzungen zeichnen sich durch eine gute Haftung an einer Vielzahl von Untergründen aus, ohne aber auf ihre Klebstoffeigenschaften hin optimiert zu sein. Die Klebstoffeigenschaften beruhen teils auf einer einfachen Adhäsion, zudem aber auch auf der Fähigkeit der Schaumzusammensetzung, reaktiv an Untergründen anzubinden, die über aktivierte Wasserstoffatome verfügen. Dies ist bei Baustoffen mineralischen oder biologischen Ursprungs häufig der Fall.

Derartige Schaumzusammensetzungen sind als einkomponentige Systeme (1 K) wie auch als zweikomponentige Systeme (2K) bekannt. Bei einkomponentigen Systemen erfolgt die Aushärtung mit Hilfe von in der Umgebung enthaltener Feuchtigkeit, ggf. auch mit Hilfe von nachträglich zugeführtem Wasser. 2K-Systeme benötigen eine zweite Komponente, die in der Regel in Form eines separaten Vernetzers in der Druckdose enthalten ist und der Aktivierung durch den Benutzer bedarf.

Die erfindungsgemäßen Schaumkleberzusammensetzungen machen von diesem Prinzip Gebrauch, wobei es sich in der erster Linie um 1K-Systeme in Druckdosen handelt. Diese Schaumkleberzusammensetzungen sind hinsichtlich ihres Anwendungszwecks und ihrer Klebeeigenschaften optimiert.

Die als Montageschäume bekannten Schaumzusammensetzungen, so hat sich gezeigt, eignen sich prinzipiell zum Verkleben auch von mineralischen Baustoffen, insbesondere auch Mauersteinen. Als Mauersteine werden sowohl natürliche Steine verstanden wie auch klassische Bausteine, etwa Ziegel, Kalksandsteine, Betonsteine und dergleichen. Insbesondere kommen auch Hohlblocksteine und Formziegel mit Hohlkammern in Frage.

Gerade bei der Verklebung von Mauersteinen, die über durchgehende Hohlräume verfügen, ist aber die Anwendung von Schäumen problematisch. Dies deshalb, weil bei der Auftragung einer Kleberschicht auf die Verbindungsfläche des Mauersteins Hohlräume die Verteilung des Klebers beeinflussen, zumeist dergestalt, dass sich der Kleber, wenn dieser als Raupe auf den Stein aufgebracht ist, bei Auflegen des Decksteins überwiegend in den Hohlkammern wiederfindet. Dieser Teil des Klebers trägt dann nicht zur Verklebung der Mauersteine bei. Zugleich bleiben weite Teile des Mauersteins unbenetzt, so dass sie für eine Klebeverbindung ebenfalls nicht zur Verfügung stehen. Dies beeinträchtigt die Festigkeit der Klebeverbindung. Schließlich sind die Kosten des Schaumklebers auch zu hoch, als dass derartige Verluste in den Hohlkammern eines Steins in Kauf genommen werden können.

Die Verwendung von Sprühklebern vermag dieses Problem ebenfalls nicht zu lösen. Ein Sprühkleber gelangt bzw. versickert ebenfalls zu einem großen Teil in den Hohlkammern eines Mauersteins, wenn er flächig aufgetragen wird. Schließlich gibt es die Möglichkeit, Schaumkleber so einzustellen, dass sie unter Verlust der Raupenform zerfließen. Ein solches Zerfließen führt aber ebenfalls dazu, dass erhebliche Klebermengen in den Kammern versickern.

Die Verwendung von Schaumklebern zur Erstellung von Mauerwerk ist beispielsweise aus der WO 2004/079116 bekannt. Das dort beschriebene Verfahren macht Gebrauch von herkömmlichen Polyurethan-Montageschäumen, die sich durch den Druck des aufliegenden Steins verteilen und dabei zumindest teilweise auch die Kammern in den Formsteinen füllen. Dies ist dort erwünscht, weil damit eine Isolationswirkung einhergeht, führt aber zu erheblichen Mehrkosten.

Aus der WO 2008/031791 ist ein Verfahren zur Verklebung von u.a. Mauersteinen bekannt, bei dem ein Antischaummittel enthaltender Polyurethanschaumkleber in Raupenform auf eine der zu verklebenden Oberflächen aufgetragen wird, die dann innerhalb einer definierten Zeit in sich zusammenfällt und zur Verklebung der Mauersteine führt. Um eine rasche Verklebung herbeizuführen, wird ein Beschleuniger benötigt, der beispielsweise aus Wasser, einem Polyol und einem Katalysator besteht.

Ein Nachteil dieses Schaumklebers ist die Notwendigkeit, einen Beschleuniger zuzusetzen, um die gewünschten Verklebungseigenschaften zu erzielen. Dies erfordert zusätzliche Arbeitsschritte, Materialien, Zeit und Kosten. Des Weiteren ist die sich ausbildende Klebeschicht wenig geeignet, poröse Materialien zu verkleben, da sie nicht oder nur wenig in die Poren des Baumaterials eindringt. Dies vermindert die Kontaktfläche.

Dementsprechend ist es Aufgabe der Erfindung, eine Schaumkleberzusammensetzung bereitzustellen, die nach der Applikation in einem definierten Zeitraum in sich zusammenfällt, ohne dabei zu zerfließen, die kostengünstig hergestellt werden kann und die gezielt auch auf Hohlkammersteine so aufgebracht werden kann, dass sie die Stege und Flächen dieser Steine abdeckt, ohne in größerem Umfang in die Hohlkammern hineinzufließen oder in diese abgedrängt zu werden. Die Schaumkleberzusammensetzung soll ohne härtungsbeschleunigende Zusätze auskommen und zu einer dauerhaften, feuerfesten und sicheren Verklebung der Mauersteine führen. Insbesondere soll sie geeignet sein, über geeignete Applikatoren zielgenau auf die zu verklebenden Flächen aufgebracht zu werden.

Diese Aufgabe wird mit einer Schaumkleberzusammensetzung der eingangs genannten Art gelöst, die wenigstens einen Zellöffner in einer Menge von 0,002 bis 1 Gew.-%, bezogen auf die Gesamtheit der Komponenten der Zusammensetzung, sowie einen Dimethylethergehalt von mehr als 50 Gew.-%, bezogen auf die Treibgasmischung, enthält.

Die erfindungsgemäße Schaumkleberzusammensetzung leitet sich in weiten Teilen von herkömmlichen Zusammensetzungen für Montageschäume ab, verfügt aber nicht über deren Eigenschaften, einen stabilen und starren Schaum zu bilden. Die Rigidität eines Montageschaumes resultiert in der Praxis aus der richtigen Abmischung von Zuschlagstoffen, die die Zelleigenschaften, insbesondere die Zellstabilität regulieren.

In der Regel enthalten die erfindungsgemäßen Schaumzusammensetzungen keine Zellstabilisatoren. Der Verzicht auf Zellstabilisatoren allein reicht aber noch nicht aus, um einen für die Verklebung von mineralischen Werkstoffen geeigneten Schaumkleber im Sinne der Erfindung bereitzustellen. Wesentlich ist die richtige Abstimmung der isocyanathaltigen Prepolymerkomponente mit der Treibgasmischung und weiteren Zusätzen, insbesondere auch Zellöffnern.

Als isocyanathaltige Prepolymere kommen beispielsweise Prepolymere auf Basis von MDI (Diphenylmethandiisocyanat) und üblichen Polyetherpolyolen in Frage. In bekannter Weise können in das Prepolymer flammhemmende Polyetherpolyole einreagiert sein, beispielsweise halogenierte Polyetherpolyole.

Andere aus der Montageschaumtechnik bekannte isocyanathaltige Prepolymere können ebenfalls verwandt werden. Als Ausgangsisocyanate können genannt werden, TDI (Tolylendiisocyanat), HDI (Hexamethylendiisocyanat), IPDI (Isophorondiisocyanat) und andere aus der Literatur und Praxis bekannte Polyisocyanate. Neben üblichen Polyetherpolyolen können auch übliche Polyesterpolyole eingesetzt werden.

Erfindungsgemäß wird eine Treibgasmischung verwandt, die zu einen großen Anteil aus Dimethylether besteht. Daneben können weitere Komponenten vorhanden sein, beispielsweise Propan und/oder Butan. Der Dimethylethergehalt der Treibgasmischung beträgt mehr als 50 Gew.-%, insbesondere 60 bis 90 Gew.-% und besonders bevorzugt bei 70 bis 85 Gew.-%.

Der hohe Dimethylethergehalt der Treibgasmischung ist essentiell für die Erfindung. Dimethylether ist geeignet, die Zellstrukturen des primär entstandenen Schaums aufzuweichen und damit dem Schaum seine Rigidität zu nehmen. In Verbindung mit dem Zellöffner trägt Dimethylether wesentlich zum schnellen Kollaps des Schaums bei. Da er unmittelbar nach der Freisetzung verdampft, wirkt er nicht als Lösungsmittel; der kollabierte Schaum bleibt am Ort seiner Ausbringung ortsfest haften, ohne zu verfließen. Auch die kollabierte Schaumraupe behält noch Schaumstruktur.

Die Schaumkleberzusammensetzung enthält übliche Katalysatoren, wie sie zum einen für die Erzeugung der Prepolyerkomponente benötigt werden und zum anderen auch für das weitere Aushärten und Abreagieren mit der Luftfeuchtigkeit nach der Ausbringung der Schaumraupe. Beispiele für solche Katalysatoren sind solche auf Amin- oder Metallsalzbasis, etwa DMDEE oder Zinncarboxylate.

Wesentlich ist, dass die erfindungsgemäße Zusammensetzung einen Zellöffner in einer Menge von 0,002 bis 1 Gew.-%, bezogen auf die gesamte Zusammensetzung, enthält. Als Zellöffner kommen insbesondere Silikonöl und flüssiges Polybutadien in Frage. Es können auch Mischungen aus Polybutadien und Silikonöl eingesetzt werden. Ein Antischaummittel (Entschäumer) ist nicht erforderlich und wird nicht zugesetzt.

Bevorzugt enthält eine erfindungsgemäße Schaumkleberzusammensetzung Zellöffner in einer Menge von 0,01 bis 0,5 Gew.-%. Wird Silikonöl als Zellöffner verwandt, reichen im Allgemeinen 0,002 bis 0,02 Gew.-% aus. Flüssiges Butadien wird im Allgemeinen in einer Menge von 0,01 bis 0,1 Gew.-% benötigt.

Flüssiges Polybutadien als Zusatzstoff zu Montageschäumen ist an und für sich bekannt. In der Regel bewirkt flüssiges Polybutadien eine Zellöffnung, ohne dass die Rigidität des Schaums darunter leidet. Tatsächlich ist Polybutadien geeignet, die im Schaum gebildeten Zellen zu öffnen, ohne dass die Festigkeit der Zellwände in Mitleidenschaft gezogen wird. Insoweit bewirkt ein Polybutadienzusatz in herkömmlichen Montageschäumen die Zellöffnung unter Verhinderung der Schrumpfung eines Schaumstrangs, der Schaum wird damit dimensionsstabiler. Entsprechendes gilt für Silikonöle.

Dies ist erfindungsgemäß nicht der Fall. Vermutlich führt der Zusatz des Zellöffners in Verbindung mit dem hohen Dimethylethergehalt zum Aufweichen der Zellwände und damit zum Zusammenfallen des Schaumes.

Einen Beitrag hierzu dürfte auch die Verwendung eines Viskositätsregulierers leisten, beispielsweise in Form von Trismonochlorpropylphosphat TMCP. TMCP hat zugleich flammhemmende Wirkung. Ein solcher viskositätsregulierender Zusatz ist beispielsweise in einer Menge von 5 bis 15 Gew.-% der Zusammensetzung zugegen, insbesondere in Form von TMCP. Andere geeignete Viskositätsregulierer sind Chlorparaffine und übliche Phosphate.

Die Viskositätsregulierer fungieren teilweise als Flammschutzmittel. Weitere Flammschutzmittel, auch solche mit dualer Funktion, können zugegen sein, insbesondere als in das Prepolymergerüst einreagierte Flammschutzmittel, wie beispielsweise halogenierte Polyetherpolyole. Es handelt sich um an und für sich bekannte Produkte. Solche zusätzlichen Flammschutzmittel sind in der Regel in einer Menge von 4 bis 12 Gew.-%, bezogen auf die Zusammensetzung, zugegen.

Die erfindungsgemäße Schaumkleberzusammensetzung befindet sich insbesondere in 1K-Druckdosen, aus denen sie mittels eines geeigneten Applikators oder eine geeignete Schaumpistole ausgetragen werden kann. Die Zusammensetzung verlässt die Druckdose bzw. den Applikator/die Pistole in Form einer Schaumraupe, die in einer definierten Zeit in sich zusammenfällt, ohne zu zerfließen. Insbesondere werden Zeiten von 30 s erreicht, in denen die Schaumraupe die für die Verklebung von Mauerwerk richtige Konsistenz hat, um bei einer Fugenhöhe von nicht mehr als 1 mm beteiligten Mauersteine miteinander zu verbinden. Es versteht sich aber, dass die erfindungsgemäße Zusammensetzung auch als 2K-System appliziert werden kann, wobei als zweite Komponente ein herkömmlicher Vernetzer eingesetzt werden kann. 1,5K-Systeme sind ebenfalls möglich.

Als Zellöffner kommen erfindungsgemäß beispielsweise Lithene^{R} N4-5000 oder N4-9000 in Frage, Produkte der Firma Synthomer. Es handelt sich dabei um nicht-funktionelle flüssige Polybutadiene, wie sie auch für die Herstellung von rigiden Polyurethanschäumen zum Einsatz kommen. Weitere geeignete Produkte sind Tegiloxan^{R} 50 oder 100, Produkte der Firma Goldschmidt, die insbesondere auch zusammen mit einem flüssigen Polybutadien zum Einsatz kommen. Es handelt sich dabei um übliche Silikonöle.

Im Allgemeinen fällt eine erfindungsgemäß erzeugte Schaumraupe in einer Zeit von weniger als 30 s bis etwa 120 s in sich zusammen. Dabei bleibt die Kontaktfläche zum Untergrund im Wesentlichen unverändert, d. h. der Schaum zerfließt nicht. Der Schaum selbst entfaltet seine Klebewirkung unmittelbar nach der Ausbringung und führt zu einem festen Verbund nach spätestens 10 min. Eine endgültige Aushärtung ist nach etwa 12 h erreicht.

Die auf erfindungsgemäße Weise erzeugte Klebeschicht hat nach dem Zusammenfallen der Schaumraupe im Allgemeinen eine Dicke von etwa 0,5 bis 10 mm, insbesondere etwa 1 bis 5 mm Die Schichtdicke hängt von der Art, Geschwindigkeit und der Distanz des Austrags ab. Eine optimale Verklebung wird erst mit Schichtdicken von weniger als 1 mm erreicht.

Bei der Verklebung fällt die Schaumraupe zwar in sich zusammen, behält aber weiterhin Schaumstruktur. Dies begünstigt das Eindringen des Schaumklebers in die Porenstruktur von zu verklebenden Mauersteinen und führt zu einer festeren Verklebung. Dabei hilft das Gewicht des auf die Schaumraupe aufgelegten Mauersteins, das in der Regel für einen Klebespalt von 1 mm oder weniger sorgt. Das Volumen der Schaumraupe ist auch geeignet, Unregelmäßigkeiten in der Mauersteinoberfläche auszugleichen.

Die erfindungsgemäße Schaumkleberzusammensetzung ist insbesondere für den Austrag aus einem Adapter geeignet, mit dem parallel mehrere Stränge auf eine bestehende Reihe von Mauersteinen ausgebracht werden.

Die Erfindung wird durch die nachfolgenden Beispiele näher erläutert. Erfindungsgemäße Schaumkleberzusammensetzungen wurden aus den nachfolgenden Komponenten wie folgt zusammengesetzt:

| Ausgangsstoff | Bsp.1 | Bsp. 2 | Bsp. 3 | Bsp. 4 | Bsp. 5 |
|---|---|---|---|---|---|
| Voranol^{R}P2000 (Fa. Dow.) | 368 | 370 | 370 | 370 | 368 |
| TMCP | 236 | 240 | 240 | 240 | 236 |
| Ixol^{R}M125 | 198 | 198,5 | 198 | 198 | 198 |
| Tegiloxam^{R}100 (Fa. Goldschmidt) | | | | 0,1 | 0,4 |
| Lithene^{R}N4-5000 | | 1,5 | | 1,5 | |
| Voranol^{R}1055 | 185 | 185 | 185 | 185 | 185 |
| Tegostab^{R}B8870 (Fa. Goldschmidt) | 23 | | | | |
| Jeffcat^{R}DMDEE (Fa. Huntsman) | 5 | 5 | 5 | 5 | 5 |
| Polyolmischung gesamt | 1015 | 1000 | 998 | 1000 | 992 |
| | | | | | |
| Polyolmischung | 210 | 210 | 210 | 210 | 210 |
| Desmodur^{R}44V20L (Fa. Bayer) | 230 | 230 | 230 | 230 | 230 |
| Propan/i-Butan 1:2 | 15 | 15 | 15 | 15 | 15 |
| Dimethylether | 70 | 70 | 70 | 70 | 70 |
| Schaumkleberzusammensetzung gesamt | 525 | 525 | 525 | 525 | 525 |
| NCO-Gehalt Prepolymer | 13,04 | 13;03 | 13,02 | 13,03 | 13,01 |

Alle Angaben sind in Gramm, der NCO-Gehalt des Prepolymers ist in Gew.-% angegeben.

Die Schaumkleberzusammensetzung wird auf übliche Art und Weise hergestellt und in Druckdosen abgefüllt. Beispiel 1 ist ein Schaumkleber, der mit dem Schaumstabilisator Tegostab^{R}B8870 stabilisiert ist. Beispiel 3 enthält weder einen Zellöffner noch einen Schaumstabilisierer. Die Beispiele 2 und 4 enthalten ein flüssiges Polybutadien als Zellöffner, die Beispiele 4 und 5 ein Silikonöl als Zellöffner.

In der Praxis zeigte sich, dass die Zusammensetzung von Beispiel 1 eine feste, stabile Schaumraupe ergab, die für Klebezwecke gemäß der Erfindung nicht geeignet war.

Die Zusammensetzung von Beispiel 2 führte zu einer Schaumraupe, die nach etwa 40 s stark geschrumpft war, jedoch nach wie vor eine Raupenstruktur erkennen ließ. Die Kontaktfläche zur Steinoberfläche hatte sich stark vermindert, was jedoch einer Verwendbarkeit nicht entgegenstand.

Die Zusammensetzung von Beispiel 3 führte zu einer Schaumraupe, die nach etwa 50 s ihre Endstruktur erreicht hatte, jedoch unzureichenden Schrumpf zeigte.

Die Zusammensetzung von Beispiel 4 zeigte einen schnellen Zusammenfall, der eine Brauchbarkeit als Schaumkleber nach etwa 40 s ergab. Die Schaumraupe fiel zu einem blasigen Film mit in etwa gleicher Kontaktfläche zum Stein zusammen.

Die Zusammensetzung von Beispiel 5 verhielt sich ähnlich wie die Zusammensetzung von Beispiel 4 und ergab einen blasigen Klebefilm nach etwa 30 s.

Alle Zusammensetzungen hatten die erwünschte Klebekraft, auch dann, wenn sie nicht das erwünschte Verhalten zeigten. Die Beispiele 2, 4 und 5 zeigten das beste Klebeverhalten.

## Patentansprüche

1. Schaumkleberzusammensetzung zum Verkleben von mineralischen Werkstoffen, insbesondere Mauersteinen, wobei die Zusammensetzung nach der Applikation in einem definierten Zeitraum in sich zusammenfällt, ohne zu zerfließen, enthaltend ein isocyanathaltiges Prepolymer, eine Treibgasmischung, Katalysator sowie viskositätsregulierende und/oder flammhemmende Zusätze, **dadurch gekennzeichnet, dass** die Zusammensetzung wenigstens einen Zellöffner in einer Menge von 0,002 bis 1 Gew.-%, bezogen auf die gesamte Zusammensetzung, sowie einen Dimethylethergehalt von mehr als 50 Gew.-%, bezogen auf die Treibgasmischung, aufweist.

2. Zusammensetzung nach Anspruch 1, **dadurch gekennzeichnet, dass** der Zellöffner ein Silikonöl und/oder ein flüssiges Polybutadien ist.

3. Zusammensetzung nach Anspruch 1 oder 2, **dadurch gekennzeichnet, dass** der Zellöffner ein Silikonöl oder eine Mischung aus einem Silikonöl und einem flüssigen Polybutadien ist.

4. Zusammensetzung nach Anspruch 2 oder 3, **gekennzeichnet durch** ein Gehalt von 0,002 bis 0,02 Gew.-% an Silikonöl und/oder 0,01 bis 0,1 Gew.-& an flüssigem Butadien.

5. Zusammensetzung nach einem der vorstehenden Ansprüche, **dadurch gekennzeichnet, dass** Dimethylether 60 bis 90 Gew.-% der Treibgasmischung ausmacht.

6. Zusammensetzung nach Anspruch 5, **dadurch gekennzeichnet, dass** Dimethylether 70 bis 85 Gew.-% der Treibgasmischung ausmacht.

7. Zusammensetzung nach einem der vorstehenden Ansprüche, **dadurch gekennzeichnet, dass** die Treibgasmischung neben Dimethylether Propan und/oder Butan enthält.

8. Zusammensetzung nach einem der vorstehenden Ansprüche, **dadurch gekennzeichnet, dass** sie Trismonochlorpropylphosphat (TMCP) als Viskositätsregulierer und Flammhemmer enthält.

9. Zusammensetzung nach Anspruch 8, **gekennzeichnet durch** ein TMCP-Gehalt von 5 bis 15 Gew.-%.

10. Zusammensetzung nach einem der vorstehenden Ansprüche, mit einem einreagierten Flammschutzmittel.

11. Zusammensetzung nach Anspruch 10, **gekennzeichnet durch** 4 bis 12 Gew.-% einreagiertes halogeniertes Polyetherpolyol.

12. Zusammensetzung nach einem der vorstehenden Ansprüche, **gekennzeichnet durch** einen Gehalt von 10 bis 15 Gew.-% an freiem Isocyanat im Prepolymer.

13. Zusammensetzung nach einem der vorstehenden Ansprüche, **dadurch gekennzeichnet, dass** sie innerhalb einer Zeitspanne von 30 s in sich zusammenfällt, ohne zu verfließen.

14. Zusammensetzung nach einem der vorstehenden Ansprüche, enthalten in einer 1 K-Druckdose.

## Claims

1. A foam adhesive composition for adhering mineral materials, particularly building bricks, wherein within a defined period of time after the application the composition collapses into itself without flowing, including an isocyanate-containing prepolymer, a blowing gas mixture, catalyst and viscosity regulating and/or flame-retarding additives, **characterised in that** the composition includes at least one cell opener in an amount of 0.002 to 1 wt.% with respect to the entire composition and a dimethylether content of more than 50 wt.% with respect to the blowing gas mixture.

2. A composition as claimed in Claim 1, **characterised in that** the cell opener is a silicone oil and/or a liquid polybutadiene.

3. A composition as claimed in Claim 1 or 2, **characterised in that** the cell opener is a silicone oil or a mixture of a silicone oil and a liquid polybutadiene.

4. A composition as claimed in Claim 2 or 3, **characterised by** a content of 0.002 to 0.02 wt.% of silicone oil and/or 0.01 to 0.1 wt.% of liquid butadiene.

5. A composition as claimed in one of the preceding claims, **characterised in that** dimethylether represents 60 to 90 wt.% of the blowing gas mixture.

6. A composition as claimed in Claim 5, **characterised in that** dimethylether represents 70 to 85 wt.% of the blowing gas mixture.

7. A composition as claimed in one of the preceding claims, **characterised in that** the blowing gas mixture contains propane and/or butane in addition to dimethylether.

8. A composition as claimed in one of the preceding claims, **characterised in that** it includes trismonochloropropylphosphate (TMCP) as a viscosity regulator and flame retardant.

9. A composition as claimed in Claim 8, **characterised by** a TMCP content of 5 to 15 wt.%.

10. A composition as claimed in one of the preceding claims with a flame retardant chemically incorporated.

11. A composition as claimed in Claim 10, **characterised by** 4 to 12 wt.% chemically incorporated halogenated polyetherpolyol.

12. A composition as claimed in one of the preceding claims, **characterised by** a content of 10 to 15 wt.% of free isocyanate in the prepolymer.

13. A composition as claimed in one of the preceding claims, **characterised in that** it collapses into itself within a period of 30 s without flowing.

14. A composition as claimed in one of the preceding claims contained in a 1K pressurised dispenser.

## Revendications

1. Composition d'adhésif mousse, pour coller des matériaux minéraux, en particulier des pierres pour murs, la composition subissant un affaissement après son application dans un laps de temps défini, sans subir de déliquescence, contenant un prépolymère contenant des isocyanates, un mélange de gaz porogènes, un catalyseur, ainsi que des additifs régulateurs de viscosité et/ou retardateurs de flamme, **caractérisée en ce que** la composition comprend au moins un agent d'ouverture des alvéoles en une quantité de 0,002 à 1 % en poids par rapport à la totalité de la composition, ainsi qu'une teneur en diméthyléther supérieure à 50 % en poids par rapport au mélange de gaz porogènes.

2. Composition selon la revendication 1, **caractérisée en ce que** l'agent d'ouverture des alvéoles est une huile de silicone et/ou un polybutadiène liquide.

3. Composition selon la revendication 1 ou 2, **caractérisée en ce que** l'agent d'ouverture des alvéoles est une huile de silicone ou un mélange d'une huile de silicone et d'un polybutadiène liquide.

4. Composition selon la revendication 2 ou 3, **caractérisée par** une teneur en huile de silicone de 0,02 à 0,02 % en poids et/ou en butadiène liquide de 0,01 à 0,1 % en poids.

5. Composition selon l'une des revendications précédentes, **caractérisée en ce que** le diméthyléther représente 60 à 90 % en poids du mélange de gaz porogènes.

6. Composition selon la revendication 5, **caractérisée en ce que** le diméthyléther représente 70 à 85 % en poids du mélange de gaz porogènes.

7. Composition selon l'une des revendications précédentes, **caractérisée en ce que** le mélange de gaz porogènes contient, outre du diméthyléther, du propane et/ou du butane.

8. Composition selon l'une des revendications précédentes, **caractérisée en ce qu'**elle contient en tant que régulateur de viscosité et retardateur de flamme du phosphate de trismonochloropropyle (TMCP).

9. Composition selon la revendication 8, **caractérisée par** une teneur en TMCP de 5 à 15 % en poids.

10. Composition selon l'une des revendications précédentes, comportant un agent d'ignifugation introduit par réaction.

11. Composition selon la revendication 10, **caractérisée par** 4 à 12 % en poids d'un polyétherpolyol halogéné introduit par réaction.

12. Composition selon l'une des revendications précédentes, **caractérisée par** une teneur du prépolymère en isocyanate libre de 10 à 15 % en poids.

13. Composition selon l'une des revendications précédentes, **caractérisée en ce qu'**elle subit un affaissement en un laps de temps de 30 s sans subir de déliquescence.

14. Composition selon l'une des revendications précédentes, contenue dans un récipient sous pression 1K.
